# EUROPEAN PATENT SPECIFICATION

(11) **EP 3 620 051 B1**
(45) Date of publication and mention of the grant of the patent: **03.12.2025**
(21) Application number: 19194187.1
(22) Date of filing: 28.08.2019
(51) Int. Cl.: A01N 33/12, A01N 31/08, A01N 35/02, A01N 35/04, A01N 37/16, A01N 55/00, A01N 59/00, A01P 1/00

(54) **CLEANING COMPOSITION INCLUDING BOTH A DISINFECTANT AND A LONG-LASTING ANTIMICROBIAL COMPONENT**
REINIGUNGSZUSAMMENSETZUNG MIT EINEM DESINFEKTIONSMITTEL UND EINEM LANGWIRKENDEN ANTIMIKROBIELLEN BESTANDTEIL
COMPOSITION DE NETTOYAGE COMPRENANT À LA FOIS UN DÉSINFECTANT ET UN COMPOSANT ANTIMICROBIEN DE LONGUE DURÉE

(30) Priority: 04.09.2018 US 201816120881
(43) Date of publication of application: 11.03.2020
(73) Proprietor: Parasol Medical LLC, Buffalo Grove, Illinois 60089 (US)
(72) Inventor: EDDY, Patrick E, Allendale, MI Michigan 49401 (US)
(74) Representative: Hepworth Browne

(56) References cited:
- EP-A2- 0 129 980
- WO-A1-00/54587
- WO-A1-00/72850
- WO-A1-2008/094718
- WO-A1-2011/017097
- WO-A2-2005/042657
- WO-A2-2008/076839
- WO-A2-2013/102021
- US-A- 4 921 691
- US-A1- 2002 111 282
- US-A1- 2007 021 383
- .: "Aerosol Dispensers Directive Evaluation - Background document", 23 September 2016 (2016-09-23), Belgium, pages 1, XP055639393, Retrieved from the Internet <URL:https://ec.europa.eu/docsroom/documents/18781/attachments/1/translations/en/renditions/pdf> [retrieved on 20191106]
- ROBERT A MONTICELLO: "THE USE OF REACTIVE SILANE CHEMISTRIES TO PROVIDE DURABLE, NON-LEACHING ANTIMICROBIAL SURFACES", AEGIS ENVIROMENTS, 1 January 2010 (2010-01-01), pages 1 - 77, XP055330565, Retrieved from the Internet <URL:http://smartfabrx.com/docs/The-use-of-reactive-silane-chemistries.pdf> [retrieved on 20161220]
- .: "MATERIAL SAFETY DATA SHEET AEGIS Microbe Shield(TM) Program: Octadecylaminodimethyltrihydroxysilylpropyl Ammonium Chloride", 12 May 2004 (2004-05-12), Midland, MI, U.S.A., pages 1 - 5, XP055639076, Retrieved from the Internet <URL:http://www.microbeshield.co.uk/pdf/Aegis-Health-Saftey-Data-Sheet.pdf> [retrieved on 20191105]

## Description

### BACKGROUND OF THE INVENTION

Healthcare facilities are required to disinfect various surfaces to kill microorganisms present on those surfaces, in order to reduce the likelihood of transmission of the microorganisms to patients and other people. The transmission of the microorganisms to patients and other people could cause illness. Such microorganisms include *Mycobacterium tuberculosis* and other bacteria, fungi, and viruses. Various disinfectants are available in the marketplace for healthcare facilities to purchase. The disinfectant provides quick log reduction of the microorganisms on the surfaces to which the disinfectant is applied. Surfaces commonly cleaned with a disinfectant include critical and non-critical medical equipment and environmental surfaces (such as bedside tables, bedrails, and laboratory surfaces).

However, disinfecting is a continuous, laborious, and expensive effort for healthcare facilities.

WO2013102021A2 discloses a low pH disinfectant composition that includes a relatively low amount of alcohol. The composition can optionally include a stable residual antimicrobial compound, thereby providing a combination of high-level disinfection and long-lasting residual effect. WO2008094718A1 discloses a neutral pH aqueous ready-to-use cleaning and disinfectant compositions including hydrogen peroxide as an active disinfecting constituent including a C1 -C6 monohydric alcohol, and a surfactant or surfactant mixture.

### BRIEF SUMMARY OF THE INVENTION

The present disclosure solves that problem with a cleaning composition that includes both a disinfectant, which provides quick log reduction of microorganisms present on the surface to which the cleaning composition is applied, and an antimicrobial component that adheres and/or bonds to the surface to provide long-term ability to kill microorganisms that subsequently become present on the surface to which the cleaning composition is applied. The cleaning composition thus reduces the need for the healthcare facility to continuously disinfect the surfaces (the antimicrobial component preventing infection of the surfaces), saving labor and material costs, which can then be diverted to other areas of improving patient care.

The present disclosure further saves labor costs for healthcare facilities with an aerosol can that includes a propellant and an antimicrobial solution. The aerosol can further includes a disinfectant. Thus, the healthcare facility can apply the antimicrobial solution to less critical surfaces, where disinfecting is not required, more quickly than other application methods such as wipes. In addition, the aerosol can further includes a disinfectant, and the healthcare facility can most quickly apply the disinfectant and antimicrobial as above to more critical surfaces to kill microorganisms and further provide long term antimicrobial capability to the surfaces.

According to the invention, there is provided an aerosol can of claim 1.

Embodiments of the first aspect of the invention include any one or a combination of the following disinfectants, and one or more of the following silane quaternary ammonium compounds:
- the disinfectant includes ortho-phthalaldehyde;
- the ortho-phthalaldehyde constitutes 0.275 percent to 0.65 percent by weight of the cleaning composition;
- the disinfectant includes peracetic acid;
- the peracetic acid constitutes 0.04 to 0.35 percent by weight of the cleaning composition;
- the disinfectant includes glutaraldehyde;
- the glutaraldehyde constitutes 1.2 to 3.5 percent by weight of the cleaning composition;
- the disinfectant includes sodium hypochlorite;
- the sodium hypochlorite constitutes 1.5% to 12.5% of the cleaning composition;
- the silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, or 3-(trihydroxysilyl)propyldimethyloctadecyl ammonium chloride; and
- the silane quaternary ammonium ion or salt thereof constitutes 0.05% to 5% by weight of the cleaning composition.

Embodiments of the second aspect of the invention include any one or a combination of the following features:
- the contents comprise one or more disinfectants selected from the group consisting of: ortho-phthalaldehyde; peracetic acid; glutaraldehyde; and sodium hypochlorite.

The advantages and objects of the present invention will be further understood and appreciated by those skilled in the art by reference to the following specification, claims, and appended drawings.

### BRIEF DESCRIPTION OF THE DRAWINGS

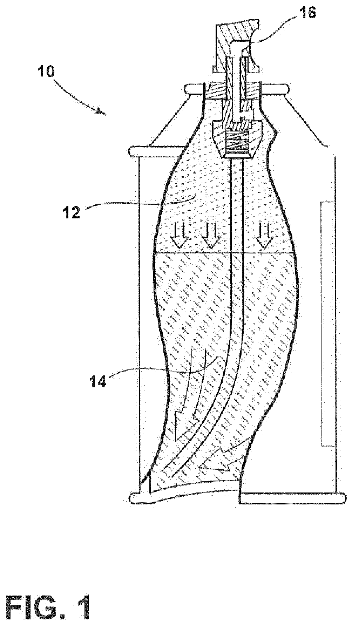

FIG. 1 is a cut away view of an aerosol can, illustrating the contents of the aerosol can including a propellant and a solution, which includes a silane quaternary ammonium ion or salt thereof as an antimicrobial component and optionally one or more disinfectants.

### DETAILED DESCRIPTION

For purposes of description herein, it is to be understood that the specific devices and processes illustrated in the attached drawings, and described in the following specification are simply exemplary embodiments of the inventive concepts defined in the appended claims. Hence, physical characteristics relating to the embodiments disclosed herein are not to be considered as limiting, unless the claims expressly state otherwise.

A cleaning composition of the present disclosure includes both a disinfectant and an antimicrobial component. According to the invention, the antimicrobial component is a silane quaternary ammonium ion or salt thereof. Silane quaternary ammonium ions or salts thereof bond to the surface to which ions or salts thereof are applied, imparting long-lasting antimicrobial properties to the surface. According to the invention, the silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, or 3-(trihydroxysilyl)propyldimethyloctadecyl ammonium chloride.

In an embodiment, the silane quaternary ammonium ion or salt thereof is part of a solution, before being mixed with the disinfectant (or a solution including the disinfectant). The solution, of which the silane quaternary ammonium ion or salt thereof is part, further includes a solvent. According to the invention, the solvent is isopropyl alcohol. The silane quaternary ammonium ion or salt thereof can comprise between 0.1 percent and 10 percent by weight of the solution. More preferably, the silane quaternary ammonium ion or salt thereof can comprise between 0.75 percent and 5 percent by weight of the solution. Even more preferably, the silane quaternary ammonium ion or salt thereof can comprise between 1.9 percent and 2.1 percent by weight of the solution. An example preferable solution comprises (by weight) 60.0 percent isopropyl alcohol, 2.02 percent 3-(trimethoxysilyl)propyldimethyloctadecyl ammonium chloride, and 34.19 percent deionized water.

The disinfectant can be any disinfectant capable of quickly reducing the amount of microorganisms on the surface to which the disinfectant is applied. The disinfectant is typically available in the form of a solution that includes the disinfectant. According to the invention, the disinfectant is selected from ortho-phthalaldehyde, peracetic acid, glutaraldehyde, and sodium hypochlorite. In an embodiment, the cleaning composition is made by mixing (1) the solution that includes the disinfectant to impart the disinfectant to the cleaning composition with (2) a solution including the antimicrobial component to impart to the antimicrobial component to the cleaning composition, such as, for example, the solution including (by weight) 60.0 percent isopropyl alcohol, 2.02 percent 3-(trimethoxysilyl)propyldimethyloctadecyl ammonium chloride, and 34.19 percent deionized water. The solution including the antimicrobial component can be between 0.01 percent by weight and 50 percent by weight of the cleaning composition. The balance of the cleaning composition can include the solution that includes the disinfectant. In any event, the silane quaternary ammonium ion or salt thereof constitutes, in some embodiments, 0.05% to 10% by weight of the cleaning composition.

In an embodiment, the disinfectant is ortho-phthalaldehyde. Ortho-phthalaldehyde demonstrates microbiocidal, mycobactericidal, bactericidal, and sporicidal activity. Ortho-phthalaldehyde is used as a disinfectant and is commercially available in the form of a solution (Rapicide OPA-28CIDEX OPA, Minntech Corporation, Minnesota; Advanced Sterilization Products, CA; OPA 30, Ciden Technologies, LLC, Massachusetts; among others) that includes 0.55% to 0.60% by weight ortho-phthalaldehyde, depending upon the supplier. In an embodiment, the cleaning composition is made by mixing (1) 50% by weight to 99.9% by weight of the solution that includes 0.55% to 0.60% by weight ortho-phthalaldehyde with (2) 0.01% by weight to 50% by weight of the solution that includes the antimicrobial component. A resulting cleaning composition will thus include 0.275 percent by weight to 0.60 percent by weight ortho-phthalaldehyde. In another embodiment, the cleaning composition is made by dissolving ortho-phthalaldehyde and the silane quaternary ammonium ion or salt thereof in a solvent such that the cleaning composition comprises (by weight) 0.275 percent to 0.60 percent ortho-phthalaldehyde, and 0.05 percent and 10 percent silane quaternary ammonium ion or salt thereof.

In another embodiment, the disinfectant is peracetic acid. Peracetic acid demonstrates sporicidal, bactericidal, virucidal, and fungicidal activity. Peracetic acid is used as a disinfectant and is commercially available in solutions (Peract 20, Minntech Corporation, Minnesota; Acecide-C, Best Sanitizers, Inc., California; Steris S40 Sterilant Concentrate, Steris Corporation, Missouri; among others) that include, after any required dilution, between 0.08% weight percent and 0.35% by weight peracetic acid, depending on the supplier. In an embodiment, the cleaning composition is made by mixing (1) 50% by weight to 99.9% by weight of the solution, after any required dilution, that includes between 0.08% weight and 0.35% percent peracetic acid with (2) 0.01% by weight to 50% by weight of the solution that includes the antimicrobial component. A resulting cleaning composition will thus include 0.04 percent by weight to 0.35 percent by weight peracetic acid. In another embodiment, the cleaning composition is made by mixing peracetic acid and the silane quaternary ammonium ion or salt thereof dissolved in a solvent such that the cleaning composition comprises (by weight) 0.08 percent to 0.35 percent peracetic acid and 0.05 percent and 10 percent silane quaternary ammonium ion or salt thereof.

In another embodiment, the disinfectant is glutaraldehyde (including either an alkaline glutaraldehyde or an acid glutaraldehyde, or a combination of both). Glutaraldehyde demonstrates bactericidal, sporicidal, fungicidal and virucidal activity. Glutaraldehyde is used as a disinfectant and is commercially available in the form of a solution (Cidex Activated Dialdehyde Solution, Advanced Sterilization Products; Wavicide, Wave Energy Systems, New Jersey; Cidex PlusTM 28 Day Solution, Johnson & Johnson Medical Products; Sporicidin Sterilizing and Disinfecting Solution, Sporicidin International, South Carolina; Banicide Advanced, Pascal Company, Inc., Washington; among others) that include between 1.12% glutaraldehyde and 3.5% glutaraldehyde, depending on the supplier. In an embodiment, the cleaning composition is made by mixing (1) 50% by weight to 99.9% by weight of the solution that includes 1.12 to 3.5 weight percent glutaraldehyde with (2) 0.01% by weight to 50% by weight of the solution that includes the antimicrobial component. A resulting cleaning composition will thus include 0.56 percent by weight 1.75 percent by weight glutaraldehyde. In another embodiment, the cleaning composition is made by dissolving glutaraldehyde and the silane quaternary ammonium ion or salt thereof in a solvent such that the cleaning composition comprises (by weight) 1.12 percent to 3.5 percent glutaraldehyde and 0.05 percent and 10 percent silane quaternary ammonium ion or salt thereof.

In another embodiment, the disinfectant is sodium hypochlorite. Chlorine releasing agents demonstrate antimicrobial, sporicidal, and virucidal activity. Chlorine releasing agents are used as a disinfectant and are commercially available in the form of a solution (Clorox Bleach Germicidal Cleaner, The Clorox Company, California; among others) that includes 0.65% sodium hypochlorite. In an embodiment, the cleaning composition is made by mixing (1) 50% by weight to 99.9% by weight of the solution that includes 0.65 weight percent sodium hypochlorite with (2) 0.01% by weight to 50% by weight of the solution that includes the antimicrobial component. A resulting cleaning composition will thus include 0.325 percent by weight to 0.65 percent by weight sodium hypochlorite. In another embodiment, the cleaning composition is made by mixing sodium hypochlorite and a solution containing the silane quaternary ammonium ion or salt thereof such that the cleaning composition comprises (by weight) 0.325 percent to 12.5 percent sodium hypochlorite and 0.05 percent and 10 percent silane quaternary ammonium ion or salt thereof.

Referring now to FIG. 1, the contents of an aerosol can 10 include a propellant 12 and a solution 14 that includes a silane quaternary ammonium ion or salt thereof. As described above, the silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, or 3-(trihydroxysilyl)propyldimethyloctadecyl ammonium chloride. The solution 14 further includes one or more disinfectants. The one or more disinfectants include any of the following: ortho-phthalaldehyde; peracetic acid; glutaraldehyde; and sodium hypochlorite. The silane quaternary ammonium ion or salt thereof can be 0.05% to 10% by weight of the solution. The one or more disinfectants can be 0.01% to 5% by weight of the solution. As known in the aerosol can 10 field, the propellant 12 mixes with the solution 14 and creates a mist of propellant 12 and solution 14 upon release from a nozzle 16. The solution 14 containing the silane quaternary ammonium ion or salt thereof and, optionally, the one or more disinfectants, can thus be sprayed onto a surface by a user to provide long-lasting antimicrobial properties and, optionally, quickly disinfect the surface.

## Claims

1. An aerosol can (10) comprising:
a propellant (12); and
a solution (14) comprising a silane quaternary ammonium ion or salt thereof, 55 percent to 65 percent by weight of the solution isopropyl alcohol, and one or more disinfectants;
wherein, the silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-trihydroxysilyl)propyldimethyloctadecyl ammonium ion, and 3-(trihydroxysilyl)propyldimethyloctadecyl ammonium chloride; and
wherein, the one or more disinfectants are selected from the group consisting of:
ortho-phthalaldehyde;
peracetic acid;
glutaraldehyde; and
sodium hypochlorite.

2. The aerosol can (10) of claim 1, the one or more disinfectants includes ortho-phthalaldehyde, and the ortho-phthalaldehyde constitutes 0.275 percent to 0.65 percent by weight of the solution (14).

3. The aerosol can (10) of claim 1, the one or more disinfectants includes peracetic acid.

4. The aerosol can (10) of claim 3, the peracetic acid constituting 0.04 to 0.35 percent by weight of the solution (14).

5. The aerosol can (10) of claim 1, the one or more disinfectants includes glutaraldehyde, and the glutaraldehyde constitutes 1.2 to 3.5 percent by weight of the solution (14).

6. The aerosol can (10) of claim 1, the one or more disinfectants further comprises two or more of the following: octyldecyldimethyl ammonium chloride, dioctyldimethyl ammonium chloride, didecyldimethyl ammonium chloride, and n-alkyl (C14 to C16) dimethylbenzyl ammonium chloride.

7. The aerosol can (10) of claim 6, octyldecyldimethylammonium chloride constituting 0.0127% to 0.102% by weight of the solution (14), dioctyldimethyl ammonium chloride constituting 0.00509% to 0.0407% by weight of the solution (14), didecyldimethyl ammonium chloride constituting 0.00763% to 0.061% by weight of the solution (14), and n-alkyl (C14 to C16) dimethylbenzyl ammonium chloride constituting 0.017% to 0.136% by weight of the solution (14).

8. The aerosol can (10) of claim 6, octyldecyldimethyl ammonium chloride constituting 0.0127% to 0.0254% by weight of the solution (14), dioctyldimethyl ammonium chloride constituting 0.00636% to 0.0127% by weight of the solution (14), didecyldimethyl ammonium chloride constituting 0.00636% to 0.0127% by weight of the solution (14), and n-alkyl (C14 to C16) dimethylbenzyl ammonium chloride constituting 0.0170% to 0.0339% by weight of the solution (14).

9. The aerosol can (10) of claim 6, didecyldimethyl ammonium chloride constituting 0.0198% to 0.0396% by weight of the solution (14), and n-alkyl (C14 to C16) dimethylbenzyl ammonium chloride constituting 0.0264% to 0.132% by weight of the solution (14).

10. The aerosol can (10) of claim 1, the one or more disinfectants includes sodium hypochlorite, and the sodium hypochlorite constitutes 1.5% to 12.5% by weight of the solution (14).

11. The aerosol can (10) of claim 1, the one or more disinfectants further comprises hydrogen peroxide, and the hydrogen peroxide constitutes 0.05% to 7.5% by weight of the solution (14).

12. The aerosol can (10) of claim 1, the one or more disinfectants includes both peracetic acid and hydrogen peroxide, with the peracetic acid constituting 0.04 to 0.35 percent by weight of the solution (14) and the hydrogen peroxide constituting 0.05% to 7.5% by weight of the solution (14).

13. The aerosol can (10) of any one of claims 1-12, wherein the silane quaternary ammonium ion or salt thereof constitutes 0.05% to 10% by weight of the solution (14).

## Patentansprüche

1. Sprühdose (10), die Folgendes umfasst:
ein Treibmittel (12) und
eine Lösung (14), die ein quaternäres Silan-Ammoniumion oder ein Salz davon, 55 Gew.-% bis 65 Gew.-% der Lösung Isopropylalkohol und ein oder mehrere Desinfektionsmittel umfasst;
wobei das quaternäre Silan-Ammoniumion oder das Salz davon Folgendes ist:
3-(Trimethoxysilyl)propyldimethyloctadecylammoniumion,
3-(Trimethoxysilyl)propyldimethyloctadecylammoniumchlorid,
3-(Trihydroxysilyl)propyldimethyloctadecylammoniumion und/oder
3-(Trihydroxysilyl)propyldimethyloctadecylammoniumchlorid und
wobei das eine oder die mehreren Desinfektionsmittel ausgewählt sind aus der Gruppe bestehend aus:
ortho-Phthalaldehyd;
Peressigsäure;
Glutaraldehyd und
Natriumhypochlorit.

2. Sprühdose (10) nach Anspruch 1, wobei das eine oder die mehreren Desinfektionsmittel ortho-Phthalaldehyd einschließen und das ortho-Phthalaldehyd 0,275 Gew.-% bis 0,65 Gew.-% der Lösung (14) darstellt.

3. Sprühdose (10) nach Anspruch 1, wobei das eine oder die mehreren Desinfektionsmittel Peressigsäure einschließen.

4. Sprühdose (10) nach Anspruch 3, wobei die Peressigsäure 0,04 bis 0,35 Gew.-% der Lösung (14) darstellt.

5. Sprühdose (10) nach Anspruch 1, wobei das eine oder die mehreren Desinfektionsmittel Glutaraldehyd einschließen und das Glutaraldehyd 1,2 bis 3,5 - Gew.-% der Lösung (14) darstellt.

6. Sprühdose (10) nach Anspruch 1, wobei das eine oder die mehreren Desinfektionsmittel weiterhin zwei oder mehr des Folgenden einschließen: Octyldecyldimethylammoniumchlorid, Dioctyldimethylammoniumchlorid, Didecyldimethylammoniumchlorid und n-Alkyl-(C14- bis C16-)dimethylbenzylammoniumchlorid.

7. Sprühdose (10) nach Anspruch 6, wobei Octyldecyldimethylammoniumchlorid 0,0127 Gew.-% bis 0,102 Gew.-% der Lösung (14) darstellt, Dioctyldimethylammoniumchlorid 0,00509 Gew.-% bis 0,0407 Gew.-% der Lösung (14) darstellt, Didecyldimethylammoniumchlorid 0,00763 Gew.-% bis 0,061 Gew.-% der Lösung (14) darstellt und n-Alkyl-(C14- bis C16-)dimethylbenzylammoniumchlorid 0,017 Gew.-% bis 0,136 Gew.-% der Lösung (14) darstellt.

8. Sprühdose (10) nach Anspruch 6, wobei Octyldecyldimethylammoniumchlorid 0,0127 Gew.-% bis 0,0254 Gew.-% der Lösung (14) darstellt, Dioctyldimethylammoniumchlorid 0,00636 Gew.-% bis 0,0127 Gew.-% der Lösung (14) darstellt, Didecyldimethylammoniumchlorid 0,00636 Gew.-% bis 0,0127 Gew.-% der Lösung (14) darstellt und n-Alkyl-(C14- bis C16-)dimethylbenzylammoniumchlorid 0,0170 Gew.-% bis 0,0339 Gew.-% der Lösung (14) darstellt.

9. Sprühdose (10) nach Anspruch 6, wobei Didecyldimethylammoniumchlorid 0,0198 Gew.-% bis 0,0396 Gew.-% der Lösung (14) darstellt und n-Alkyl-(C14- bis C16-)dimethylbenzylammoniumchlorid 0,0264 Gew.-% bis 0,132 Gew.-% der Lösung (14) darstellt.

10. Sprühdose (10) nach Anspruch 1, wobei das eine oder die mehreren Desinfektionsmittel Natriumhypochlorit einschließen und das Natriumhypochlorit 1,5 Gew.-% bis 12.5 -Gew.-% der Lösung (14) darstellt.

11. Sprühdose (10) nach Anspruch 1, wobei das eine oder die mehreren Desinfektionsmittel weiterhin Wasserstoffperoxid einschließen und das Wasserstoffperoxid 0,05 Gew.-% bis 7,5 -Gew.-% der Lösung (14) darstellt.

12. Sprühdose (10) nach Anspruch 1, wobei das eine oder die mehreren Desinfektionsmittel sowohl Peressigsäure als auch Wasserstoffperoxid einschließen, wobei die Peressigsäure 0,04 bis 0,35 Gew.-% der Lösung (14) darstellt und das Wasserstoffperoxid 0,05 Gew.-% bis 7,5 Gew.-% der Lösung (14) darstellt.

13. Sprühdose (10) nach einem der Ansprüche 1 - 12, wobei das quaternäre Silan-Ammoniumion oder das Salz davon 0,05 Gew.-% bis 10 Gew.-% der Lösung (14) darstellt.

## Revendications

1. Boite d'aérosol (10) comprenant :
un propulsant (12) ; et
une solution (14) comprenant un sel ou ion d'ammonium quaternaire de silane, de l'alcool isopropylique à raison de 55 pourcents à 65 pourcents en poids de la solution, et un ou plusieurs désinfectants ;
selon laquelle l'ion ou le sel d'ammonium quaternaire de silane est l'un ou plusieurs parmi : l'ion de 3-(triméthoxysilyl)propyldiméthyloctadécylammonium, le chlorure de 3-(triméthoxysilyl)propyldiméthyloctadécylammonium, l'ion de 3-trihydroxysilyl)propyldiméthyloctadécylammonium, et le chlorure de 3-(trihydroxysilyl)propyldiméthyloctadécylammonium ; et
selon laquelle le ou les plusieurs désinfectants sont choisis dans le groupe consistant en :
l'ortho-phthalaldéhyde ;
l'acide peracétique ;
le glutaraldéhyde ; et
l'hypochlorite de sodium.

2. Boite d'aérosol (10) selon la revendication 1, le ou les plusieurs désinfectants comportant de l'ortho-phthalaldéhyde, et l'ortho-phthalaldéhyde constitue de 0,275 pourcents à 0,65 pourcents en poids de la solution (14).

3. Boite d'aérosol (10) selon la revendication 1, le ou les plusieurs désinfectants comportant de l'acide peracétique.

4. Boite d'aérosol (10) selon la revendication 3, l'acide peracétique constituant de 0,04 à 0,35 pourcents en poids de la solution (14).

5. Boite d'aérosol (10) selon la revendication 1, le ou les plusieurs désinfectants comportant du glutaraldéhyde, et le glutaraldéhyde constitue de 1,2 à 3,5 pourcents en poids de la solution (14).

6. Boite d'aérosol (10) selon la revendication 1, le ou les plusieurs désinfectants comprenant en outre deux ou plusieurs composants parmi les suivants : le chlorure d'octyldécyldiméthylammonium, le chlorure de dioctyldiméthylammonium, le chlorure de didécyldiméthylammonium, et le chlorure de n-alkyle (C14 à C16) diméthylbenzylammonium.

7. Boite d'aérosol (10) selon la revendication 6, le chlorure d'octyldécyldiméthylammonium constituant de 0,0127 % à 0,102 % en poids de la solution (14), le chlorure de dioctyldiméthylammonium constituant de 0,00509 % à 0,0407 % en poids de la solution (14), le chlorure de didécyldiméthylammonium constituant de 0,00763 % à 0,061 % en poids de la solution (14), et le chlorure de n-alkyle (C14 à C16) diméthylbenzylammonium constituant de 0,017 % à 0,136 % en poids de la solution (14).

8. Boite d'aérosol (10) selon la revendication 6, le chlorure d'octyldécyldiméthylammonium constituant de 0,0127 % à 0,0254 % en poids de la solution (14), le chlorure de dioctyldiméthylammonium constituant de 0,00636 % à 0,0127 % en poids de la solution (14), le chlorure de didécyldiméthylammonium constituant de 0,00636 % à 0,0127 % en poids de la solution (14), et le chlorure de n-alkyle (C14 à C16) diméthylbenzylammonium constituant de 0,0170 % à 0,0339 % en poids de la solution (14).

9. Boite d'aérosol (10) selon la revendication 6, le chlorure de didécyldiméthylammonium constituant de 0,0198 % à 0,0396 % en poids de la solution (14), et le chlorure de n-alkyle (C14 à C16) diméthylbenzylammonium constituant de 0,0264 % à 0,132 % en poids de la solution (14).

10. Boite d'aérosol (10) selon la revendication 1, le ou les plusieurs désinfectants comportant de l'hypochlorite de sodium, et l'hypochlorite de sodium constituant de 1,5 % à 12,5 % en poids de la solution (14).

11. Boite d'aérosol (10) selon la revendication 1, le ou les plusieurs désinfectants comprenant en outre du peroxyde d'hydrogène, et le peroxyde d'hydrogène constituant de 0,05 % à 7,5 % en poids de la solution (14).

12. Boite d'aérosol (10) selon la revendication 1, le ou les plusieurs désinfectants comportant à la fois de l'acide peracétique et du peroxyde d'hydrogène, l'acide peracétique constituant de 0,04 à 0,35 pourcents en poids de la solution (14) et le peroxyde d'hydrogène constituant de 0,05 % à 7,5 % en poids de la solution (14).

13. Boite d'aérosol (10) selon l'une quelconque des revendications 1 à 12, selon laquelle l'ion ou le sel d'ammonium quaternaire de silane constitue de 0,05 % à 10 % en poids de la solution (14).
